# EUROPÄISCHE PATENTSCHRIFT

(11) **EP 2 945 747 B1**
(45) Veröffentlichungstag und Bekanntmachung des Hinweises auf die Patenterteilung: **29.03.2017**
(21) Anmeldenummer: 13750538.4
(22) Anmeldetag: 06.08.2013
(51) Int. Cl.: B02C 15/00, B02C 25/00

(54) **VERFAHREN ZUR ANTRIEBSREGELUNG SOWIE NACH DEM VERFAHREN ARBEITENDES ANTRIEBSSYSTEM**
DRIVE CONTROL METHOD AND DRIVE SYSTEM OPERATING ACCORDING TO SAID METHOD
PROCÉDÉ DE RÉGLAGE D'UN ENTRAÎNEMENT ET SYSTÈME D'ENTRAÎNEMENT FONCTIONNANT SELON CE PROCÉDÉ

(30) Priorität: 16.01.2013 DE 102013200578
(43) Veröffentlichungstag der Anmeldung: 25.11.2015
(73) Patentinhaber: Siemens Aktiengesellschaft, 80333 München (DE)
(72) Erfinder: KUBE, Andreas, 52078 Aachen (DE)
(86) Internationale Anmeldenummer: PCT/EP2013/066477
(87) Internationale Veröffentlichungsnummer: WO 2014/111175

(56) Entgegenhaltungen:
- WO-A1-2008/049545
- DE-A1-102007 033 256

## Beschreibung

Die vorliegende Erfindung betrifft ein Verfahren zur Antriebsregelung, nämlich ein Verfahren zur Antriebsregelung eines Schwerlastantriebs, insbesondere eines Schwerlastantriebs bei einer Vertikalmühle zum Zerkleinern spröder Materialien, zum Beispiel Zementrohmaterial, sowie ein korrespondierendes, nach dem Verfahren arbeitendes Antriebssystem. Ein solches Verfahren geht hervor aus der WO 2008/049545 A1.

Vertikalmühlen der oben genannten Art mit einem um die Vertikale rotierenden Mahlteller sowie Mahlwalzen oberhalb des Mahltellers neigen zu starken mechanischen Schwingungen. Die dabei entstehenden Kräfte und Momente können so stark werden, dass der Mahlprozess gestoppt werden muss, um Schäden am Antriebsstrang, nämlich insbesondere Elektromotor und Getriebe, oder der Anlage insgesamt zu vermeiden.

Um solche Schwingungen gering zu halten, muss der Betreiber der Mühle bisher die Prozessparameter, also insbesondere einen Anpressdruck der Mahlwalzen, eine Rezeptur des Mahlguts sowie Zugabemengen von Mahlhilfen, so gestalten, dass die Schwingungsanregung unter einem kritischen Niveau bleibt. Dies bedeutet jedoch unerwünschte Einschränkungen in der Prozessgestaltung, die sich negativ auf viele Bereiche auswirken. Betroffen sind zum Beispiel das Spektrum von mit dem jeweils erhaltenen Mahlgut herstellbaren Produkten, die Effektivität der Mühle, der erforderliche Energieeinsatz und die Kosteneffizienz. Trotzdem sind solche Maßnahmen unzuverlässig, da für die richtige Prozessführung viel Erfahrung erforderlich ist und die Eigenschaften der zu vermahlenden oder vermahlenen Naturmaterialien zwangsläufig immer unterschiedlich sind. Dies macht es erforderlich, den Prozess kontinuierlich zu optimieren und auf das Rohmaterial einzustellen.

Dennoch kommt es bisher immer wieder zu extremen Schwingungszuständen - in der Fachterminologie als "Rumpeln" der Mühle bezeichnet -, so dass die Mühle gestoppt sowie neu angefahren werden muss. Darunter leiden die Verfügbarkeit und die Produktivität der Anlage. Außerdem drohen Getriebe- und Anlagenschäden. Zur Umgehung dieses Problems wird die Prozessführung bisher besonders defensiv gestaltet, um diese Mühlenschwingungen möglichst zu vermeiden. Im Ergebnis leiden allerdings die Produktionsrate, die Produktqualität und die Palette der herstellbaren Produkte.

Vor diesem Hintergrund und aufgrund der wachsenden Anforderungen hinsichtlich Verfügbarkeit, Effizienz sowie der Lebensdauerkosten (TCO = Total Cost of Ownership) gewinnt die Auslegung und die Anordnung der elektrischen und mechanischen Komponenten eines Antriebssystems und des jeweiligen Antriebsstrangs eines Schwerlastantriebs, insbesondere einer Vertikalmühle, zunehmend an Bedeutung.

Für Vertikalmühlen stellen derzeit Antriebssysteme mit einem Getriebe und einem Elektromotor in Form eines Asynchronmotors, vorzugsweise einem Schleifringläufer, sowie einem den Elektromotor speisenden Frequenzumrichter eine bevorzugte Lösung dar. Hierbei sind die Mühlengetriebe in der Praxis häufig als Varianten von Kegel- oder Stirnrad-Planetengetrieben ausgeführt. Die Aufgabe des Getriebes ist neben der Drehzahl- und Drehmomentwandlung die Aufnahme der axialen Mahlkräfte und deren Weiterleitung in das Fundament.

In der Praxis ist eine Regelung eines solchen Antriebssystems für eine Vertikalmühle im Wesentlichen mit folgenden Problemen konfrontiert:
Um eine optimale Prozessführung gewährleisten zu können, ist es die erste, scheinbar triviale Aufgabe des Antriebs, die vorgegebene Drehzahl des Mahltellers zu liefern. Da das am Mahlteller abgeforderte Prozessmoment schwankt, ist eine Drehzahlregelung erforderlich.

Die auf die Antriebsmechanik wirkenden Lastschwankungen und Schwingungsanregungen sind geprägt durch Impulslasten, wie sie sich zum Beispiel ergeben, wenn die Mahlwalzen grobes Mahlgut überrollen, stochastische Lasten des Mahlvorgangs, periodische Anregungen aus der Getriebe- und Mühlenkinematik sowie einen variierenden Anpressdruck der Mahlwalzen. Das Zusammenwirken dieser Belastungseinflüsse führt zu einem komplexen Lastspiel, das sogar Resonanzschwingungen anfachen kann.

Neben den Triebstrangschwingungen kann auch ein instabiles, also zum Beispiel fluidisierendes oder von Welligkeit geprägtes Mahlbett extreme Schwingungszustände der Mühle, insbesondere ein Mühlenrumpeln, verursachen.

Schließlich macht es das Vermahlen von natürlichen Produkten weitgehend unvorhersehbar, wie der Mahlprozess einzustellen ist, um einen ruhigen Lauf der Mühle zu garantieren. Daher ist es stets eine Herausforderung für den Operator im Leitstand, die richtigen Prozessparameter zu finden. Letztendlich kann der Antrieb allein einen ungünstig eingestellten Prozess zwar beruhigen, aber nicht korrigieren.

Der hier vorgestellte Ansatz befasst sich mit dem Effekt des unerwünschten Rumpelns einer Mühle aufgrund einer jeweiligen Oberflächenstruktur des Mahlbetts und eine Aufgabe der vorliegenden Erfindung besteht entsprechend darin, eine Möglichkeit anzugeben, wie sich ein solches Rumpeln effizient vermeiden oder zumindest reduzieren lässt.

Ein Grund für das Mühlenrumpeln aufgrund der Oberflächenstruktur des Mahlbetts ist, dass die Mühle als schwingfähiges System auf stochastische Anregungen aus dem Mahlprozess zum Beispiel mit regelmäßigen Relativbewegungen zwischen den Mahlwalzen und dem Mahlbett reagiert. Diese regelmäßigen Relativbewegungen resultieren aus der jeweiligen Eigenfrequenz der Mechanik und der Kinematik der Mahlwalzen, die beweglich, insbesondere schwenkbeweglich, oberhalb des Mahltellers und des sich darauf beim Mühlenbetrieb ergebenden Mahlbetts angeordnet sind. Die Mahlwalzen wirken zum einen aufgrund ihres Eigengewichts und aufgrund ihrer beweglichen, insbesondere schwenkbeweglichen Lagerung auf das Mahlbett ein. Zudem kann die Wirkung der Mahlwalzen auf das Mahlbett noch durch einen zusätzlich aufgebrachten Anpressdruck verstärkt werden.

Die oben genannte Aufgabe wird durch ein Verfahren zur Antriebsregelung einer Vertikalmühle mit den Merkmalen des Anspruchs 1 gelöst. Die Aufgabe wird außerdem durch ein Antriebssystem mit den Merkmalen des parallelen Vorrichtungsanspruchs gelöst. Die hier und im Folgenden mitunter auch nur kurz als Mühle bezeichnete Vertikalmühle umfasst einen um die Vertikale drehbaren Mahlteller, der mittels eines zumindest einen Elektromotor sowie üblicherweise ein Getriebe umfassenden Antriebsstrangs antreibbar ist und im Betrieb der Mühle angetrieben wird. Das Verfahren zeichnet sich dadurch aus, dass eine Drehzahl des Mahltellers zyklisch variiert wird.

Bei einem zur Ausführung eines solchen Verfahrens und eventuell einzelner oder mehrerer im Folgenden beschriebener Ausführungsformen bestimmten Antriebssystem, nämlich einem Antriebssystem für eine Vertikalmühle mit einem um die Vertikale rotierenden Mahlteller, umfasst das Antriebssystem zumindest einen Elektromotor, optional einen den Elektromotor speisenden Frequenzumrichter, ein Getriebe zwischen dem zumindest einen Elektromotor und dem Mahlteller sowie optional eine Sensorik zum Erhalt schwingungsrelevanter Messwerte insbesondere schwingungsrelevanter Messwerte in Form von Drehmoment- oder Drehzahlmesswerten zu einer Drehzahl eines rotierenden Bauteils der Vertikalmühle bzw. mindestens einem im oder auf das Getriebe wirkenden Antriebs- und/oder Stützmoment. Das Antriebssystem zeichnet sich durch eine Drehzahlvariationsvorrichtung aus, mit welcher eine Drehzahl des Mahltellers zyklisch variierbar ist, wobei die Drehzahlvariationsvorrichtung dafür bestimmt und eingerichtet ist, um nach dem oben skizzierten und unten mit weiteren Details beschriebenen Verfahren zu arbeiten, und im Betrieb des Antriebssystems ein solches Verfahren ausführt.

Kurz gefasst ist die Erfindung also ein Verfahren und eine Vorrichtung zur Antriebsregelung einer Schwerlastanordnung in Form eines Antriebssystems, bei dem die zyklische Variation der Drehzahl des Mahltellers darauf abzielt, dass sich in einer Oberfläche des Mahlbetts auf dem Mahlteller keine regelmäßige Struktur, also keine Welligkeit des Mahlbetts, ausbildet. Entsprechend zielen das Verfahren und die nach dem Verfahren arbeitende Vorrichtung darauf ab, eine mögliche Ursache für Mühlenrumpeln gar nicht erst entstehen zu lassen.

Der Vorteil der Erfindung besteht darin, dass durch die zyklische Variation der Drehzahl des Mahltellers das Rumpeln der Mühle vermieden oder beseitigt oder zumindest reduziert werden kann, ohne dass der Mahlvorgang gestoppt werden muss, und dass dieses Ergebnis durch einen vergleichsweise einfachen Eingriff in das Gesamtsystem, nämlich eine entsprechende Ansteuerung des Elektromotors, erzielt wird. Das Vermeiden, Beseitigen oder Reduzieren der Schwingungen wird im Folgenden zusammenfassend kurz als Vermeiden bezeichnet.

Als zyklische Variation der Drehzahl des Mahltellers wird dabei eine Variation der Drehzahl des Mahltellers mit einem insbesondere veränderlichen Drehzahlprofil verstanden, bei dem der zeitliche Mittelwert des Drehzahlprofils der Solldrehzahl des Mahltellers entspricht. Eine Sonderform einer solchen zyklischen Variation der Drehzahl des Mahltellers ist eine periodische Variation der Drehzahl des Mahltellers, zum Beispiel eine sinusförmige Variation der Drehzahl des Mahltellers um die Solldrehzahl des Mahltellers.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens wird die zyklische oder periodische Variation der Drehzahl des Mahltellers zeitgesteuert zu vorgegebenen oder vorgebbaren, insbesondere äquidistanten Zeitpunkten für eine vorgegebene oder vorgebbare Zeitspanne aktiviert, zum Beispiel alle fünf Minuten für jeweils zehn Sekunden. Die zyklische oder periodische Variation der Drehzahl des Mahltellers ist dann nicht dauerhaft aktiv. Außerhalb der Aktivierung der zyklischen oder periodischen Drehzahlvariation ergibt sich die "normale" Drehzahl des Mahltellers.

Bei einer alternativen Ausführungsform des Verfahrens wird die zyklische oder periodische Variation der Drehzahl des Mahltellers als Reaktion auf eine einen vorgegebenen oder vorgebbaren Grenzwert überschreitende Schwankung schwingungsrelevanter Messwerte aktiviert.

Schwingungsrelevante Messwerte sind alle in Bezug auf die Mühle aufgenommenen oder aufnehmbaren Messwerte, bei deren Auswertung mechanische Schwingungen der Mühle, insbesondere solche mechanischen Schwingungen, die als Rumpeln bezeichnet werden, erkennbar sind. Zur Aufnahme solcher schwingungsrelevanter Messwerte kommen Schwingungssensoren in Form von Schwingungswächtern, Vibrationssensoren oder dergleichen in Betracht, die zum Beispiel am Mühlengerüst oder sonstigen Teilen der Mühlenkonstruktion angebracht sind. Alternativ oder zusätzlich kommen auch Sensoren in Betracht, die dem Antriebsstrang zugeordnet sind und dort schwingungsrelevante Messwerte aufnehmen. Dabei kann zum Beispiel vorgesehen sein, dass mittels eines derartigen Sensors eine Erfassung der Stromaufnahme des Elektromotors erfolgt und aus einer mit variierenden Lastsituationen korrelierten Stromaufnahme des Elektromotors schwingungsrelevante Daten abgeleitet werden, so dass insoweit auch Messwerte zu einem im Betrieb der Mühle jeweils aufgenommenen Motorstrom ein Beispiel für schwingungsrelevante Messwerte sind.

Wenn ein solcher Messwert einen vorgegebenen oder vorgebbaren Grenzwert oder gegebenenfalls mehrfach hintereinander, insbesondere mehrfach hintereinander innerhalb einer vorgegebenen oder vorgebbaren Zeitspanne, einen solchen Grenzwert überschreitet, deutet dies auf ein bereits gegebenes oder bevorstehendes Mühlenrumpeln hin. Ausgehend von einer solchen Erkennung oder Vorhersage eines Mühlenrumpelns wird die zyklische oder periodische Variation der Drehzahl des Mahltellers aktiviert, um das Mühlenrumpeln wieder zu beseitigen oder zumindest zu reduzieren oder das Mühlenrumpeln von Anfang an gar nicht erst entstehen zu lassen.

Bei dieser Variante des Verfahrens erfolgt die zyklische oder periodische Variation der Drehzahl des Mahltellers also nicht dauerhaft, sondern nur bedarfsweise, nämlich wenn aufgrund der Überwachung des jeweils aufgenommenen Messwerts automatisch die Notwendigkeit erkannt wurde, einer bereits bestehenden, unerwünschten Schwingung oder einer Schwingungsgefahr, jeweils in Form von Mühlenrumpeln, zu begegnen.

Bei einer Ausführungsform des Verfahrens erfolgt die zyklische Variation der Drehzahl des Mahltellers in Form einer periodischen Variation der Drehzahl, wobei eine Frequenz und/oder eine Amplitude der der periodischen Variation der Drehzahl des Mahltellers zugrunde liegenden Signalform und alternativ oder zusätzlich gegebenenfalls auch die Signalform selbst in Abhängigkeit von einer einen vorgegebenen oder vorgebbaren Schwellwert überschreitenden Schwankung eines schwingungsrelevanten Messwerts erhöht oder verringert bzw. verändert wird. Bei dieser Variante des Verfahrens wird also aufgrund einer automatischen Auswertung des oben erwähnten Messwerts die periodische Variation der Drehzahl des Mahltellers selbst variiert. Der dabei betrachtete Schwellwert kann unterhalb oder oberhalb des weiter oben genannten Grenzwerts liegen. Bei einer dauerhaften Variation der Drehzahl des Mahltellers kommt ein Schwellwert unterhalb eines ein bestehendes oder bevorstehendes Rumpeln anzeigenden Grenzwerts in Betracht. Das Erreichen oder Überschreiten eines solchen Schwellwerts ist dann ein Hinweis darauf, dass die bereits erfolgende periodische Variation der Drehzahl des Mahltellers nicht ausreicht, um das Mühlenrumpeln zu vermeiden oder zu beseitigen. Bei einer nur in Abhängigkeit von einem überwachten Grenzwert aktivierten periodischen Variation der Drehzahl des Mahltellers wird der bei dieser Ausführungsform des Verfahrens zusätzlich betrachtete Schwellwert oberhalb eines solchen Grenzwerts liegen. Eine Überschreitung des Schwellwerts ist dann ein automatisch auswertbares Indiz darauf, dass die periodische Variation der Drehzahl des Mahltellers zum Vermeiden oder Beseitigen des Mühlenrumpelns nicht ausreicht.

Als Gegenmaßnahme wird dann sowohl bei einer dauerhaft oder nur bedarfs- oder zeitweise aktiven periodischen Variation der Drehzahl des Mahltellers die periodische Variation selbst variiert, zum Beispiel indem die Periodendauer der zugrunde liegenden Signalform vergrößert wird. Dies zielt auf eine Veränderung der Welligkeit des Mahlbetts ab und die damit erreichte Veränderung der Welligkeit des Mahlbetts zielt wiederum darauf ab, dass durch die resultierenden Bewegungen der Mahlwalzen aufgrund der Mahlbettwelligkeit keine Eigenfrequenzen im Gesamtsystem der Mühle angeregt werden und damit das Mühlenrumpeln vermieden oder beseitigt, jedenfalls zumindest reduziert wird, nämlich zum Beispiel in seiner Häufigkeit und/oder Vibrationsstärke und/oder Aufklinggeschwindigkeit.

Zur periodischen Variation der Drehzahl des Mahltellers kommen beispielsweise ein sinusförmiges Profil, ein Dreieckprofil, ein Rechteckprofil oder ein Rampenprofil in Betracht. Solche Profile lassen sich mit einem Signalgenerator oder dergleichen sowie bei einer Softwareimplementation des Verfahrens durch entsprechende mathematische Ausdrücke oder Kennfelder leicht generieren.

Bei einer weiteren oder alternativen Ausführungsform des Verfahrens wird eine Änderung einer jeweiligen Signalform, mit welcher die periodische Variation der Drehzahl des Mahltellers erfolgt, in Abhängigkeit von einer einen vorgegebenen oder vorgebbaren Schwellwert überschreitenden Schwankung schwingungsrelevanter Messwerte ausgelöst. Diese Variante des Verfahrens zeichnet sich durch Parallelen zu der oben bereits beschriebenen Änderung (Frequenz, Amplitude oder Signalform) der periodischen Variation der Drehzahl des Mahltellers aus. Hier wird allerdings in Abhängigkeit von der Überschreitung des Schwellwerts nicht die Periodendauer der periodischen Variation der Drehzahl des Mahltellers, sondern die dieser periodischen Variation zugrunde liegende Signalform geändert. Zur Lage des Schwellwerts sowie zur Anwendung dieser Variante des Verfahrens entweder bei einer dauerhaften oder bei einer nur bedarfs- oder zeitweise erfolgenden periodischen Variation der Drehzahl des Mahltellers kann auf die obigen Ausführungen verwiesen werden. Im Ergebnis zielt auch diese Variante darauf ab, nach der automatisch erkennbaren Überschreitung des Schwellwerts, welche darauf hindeutet, dass mit der bisherigen periodischen Variation der Drehzahl des Mahltellers das Mühlenrumpeln nicht vermieden oder beseitigt werden kann, die Variation der Drehzahl des Mahltellers zu verändern. Diese Veränderung erfolgt, indem die Signalform geändert wird. Auch damit wird eine Veränderung der Welligkeit des Mahlbetts erreicht. Dies zielt wiederum - wie bei der oben beschriebenen Variante des Verfahrens - darauf ab, dass durch die resultierenden Bewegungen der Mahlwalzen aufgrund der Mahlbettwelligkeit keine Eigenfrequenzen im Gesamtsystem der Mühle angeregt werden, so dass auf diese Weise das Mühlenrumpeln vermieden oder beseitigt, jedenfalls zumindest reduziert wird.

Die beiden Varianten zur Änderung der periodischen Variation der Drehzahl des Mahltellers, nämlich eine Änderung der Periodendauer und eine Änderung der Signalform, insbesondere eine quantitative und/oder eine qualitative Änderung der Signalform, sind selbstverständlich auch kombinierbar.

Weil es darum geht, gerade eine zur Anfachung von Resonanzen geeignete Regelmäßigkeit der Oberfläche des Mahlbetts zu vermeiden, kommt auch in Betracht, die einzelnen Maßnahmen quasi zufällig zur Anwendung zu bringen. Eine Softwareimplementation eines solchen Verfahrens bietet alle möglichen Varianten des Verfahrens als Funktionseinheiten oder die Änderung der Periodendauer und die Änderung der Signalform als parametrierbare Funktionseinheiten an. Auf Basis eines Zufallszahlengenerators oder dergleichen werden dann einzelne Funktionseinheiten und/oder Parameter zur Parametrierung der Funktionseinheiten oder Kombinationen von gegebenenfalls einzeln parametrierten Funktionseinheiten ausgewählt, um bei einem bestehenden oder drohenden und aufgrund der oben skizzierten Messwertüberwachung erkannten Mühlenrumpeln dem entgegenzuwirken.

Bei einer speziellen Ausführungsform einzelner oben beschriebener Varianten des Verfahrens werden als schwingungsrelevante Messwerte Drehmoment- oder Drehzahlmesswerte verwendet und aufgenommen. Die weitere Erläuterung des hier vorgeschlagenen Ansatzes basiert - ohne Verzicht auf eine weitergehende Allgemeingültigkeit - auf solchen Drehmoment- oder Drehzahlmesswerten. Diese werden im Folgenden zusammenfassend als Messwerte bezeichnet. Zum Erhalt solcher Messwerte wird mit einer Sensorik, also zumindest einem von der Sensorik umfassten oder zu der Sensorik gehörenden Sensor, eine Drehzahl eines rotierenden Bauteils des Antriebsstrangs und/oder mindestens ein im oder auf das Getriebe wirkendes Antriebs- und/oder Stützmoment erfasst.

Eine korrespondierende Ausführung des oben skizzierten Antriebssystems zeichnet sich durch eine derartige Sensorik zum Erhalt eines schwingungsrelevanten Messwerts in Form eines Drehmoment- oder Drehzahlmesswerts aus, wobei mittels der Sensorik eine Drehzahl eines rotierenden Bauteils der Vertikalmühle und/oder mindestens ein im oder auf das Getriebe wirkendes Antriebs- und/oder Stützmoment erfassbar ist und im Betrieb erfasst wird.

In diesem Zusammenhang ist anzumerken, dass die Verwendung von Sensoren, zum Beispiel Sensoren zur Aufnahme von Drehmoment- oder Drehzahlmesswerten, im Antriebsstrang (Antriebssensorik) anstelle von Schwingungssensoren an der Mühlenkonstruktion bisher offenbar nicht in Betracht gezogen worden ist. Nach den Erkenntnissen des Erfinders lässt sich aber auch mit solchen Messwerten eine mechanische Schwingung der Mühle und damit auch ein Rumpeln der Mühle erkennen. Tatsächlich ist es sogar so, dass solche Messwerte das jeweilige Prozessgeschehen noch unmittelbarer abbilden, denn die Vorgänge im Mahlwerk zeichnen sich nach der Erkenntnis des Erfinders in Drehfreiheitsgrad des Antriebs wesentlich deutlicher als im Schwingungsniveau der gesamten Mühlenkonstruktion ab. Dies liegt daran, dass das Rumpeln ein periodischer Zusammenbruch der Stützwirkung des Mahlbetts auf die Mahlwalzen ist. Im Zuge des Verlustes dieser Stützwirkung, zum Beispiel aufgrund einer Welligkeit des Mahlbetts oder einem Beiseiteweichen eines fluidisierenden Mahlguts, entsteht auch ein Einbruch des Belastungsmoments, das aus dem Mahlbett auf den Mahlteller und somit direkt auf den Antriebsstrang wirkt. Dieser Momentenverlauf ist in den genannten Messwerten direkt zu erkennen und zwar noch bevor die Mahlwalzen sich so stark bewegen, dass sich die Schwingung auch spürbar auf die weitere Mühlenkonstruktion ausbreitet. Auf diese Weise lassen sich unerwünschte Zustände wie das Mühlenrumpeln oder beginnendes Mühlenrumpeln früher und genauer erkennen. Bei vergleichenden Untersuchungen hat sich herausgestellt, dass eine Erkennung des Mühlenrumpelns über Schwingungssensoren üblicherweise frühestens nach mehreren Sekunden erfolgt. In dieser Zeit erfährt der Antrieb leicht über einhundert Lastzyklen (bei einer Rumpelfrequenz von zum Beispiel 15 Hz). Eine Auswertung der Antriebssensorik lässt die Identifikation des Rumpelns bereits nach drei bis zehn Lastzyklen, also in weniger als einer Sekunde, zu. Der Vorteil einer Verwendung einer solchen Antriebssensorik und der damit erhältlichen Messwerte besteht also darin, dass aufgrund eines eher erkennbaren Mühlenrumpelns Gegenmaßnahmen, also zum Beispiel auch eine Notabschaltung des Antriebs ("Not-Aus"), aber selbstverständlich auch die hier im Vordergrund stehende zyklische oder periodische Variation der Drehzahl des Mahltellers, früher eingeleitet werden können und damit die Belastung des Antriebs, aber auch der Mühle insgesamt, durch Mühlenrumpeln verringert werden kann.

Bei einer Ausführungsform des Verfahrens wird der Elektromotor von einem Frequenzumrichter gespeist und die zyklische oder periodische Variation der Drehzahl des Mahltellers erfolgt mittels einer entsprechenden Ansteuerung des Frequenzumrichters. Mittels eines Frequenzumrichters lassen sich die beschriebene zyklische oder periodische Variation der Drehzahl des Mahltellers durch eine entsprechende Ansteuerung des Elektromotors, aber auch die Veränderung der Periodendauer oder die Veränderung der zugrunde liegenden Signalform und Kombinationen davon vergleichsweise einfach erreichen. Eine Alternative zu einem Frequenzumrichter ist ein Überlagerungsgetriebe, mit dem in grundsätzlich äquivalenter Art und Weise die oben beschriebene zyklische oder periodische Variation der Drehzahl des Mahltellers erreicht werden kann.

Das Verfahren und das nach dem Verfahren arbeitende Antriebssystem basieren auf der zyklischen oder periodischen Variation der Drehzahl des Mahltellers und einer dafür vorgesehenen Drehzahlvariationsvorrichtung. Oben sind bereits einzelne Aspekte der Funktionalität der Drehzahlvariationsvorrichtung beschrieben worden. Die Funktionalität der Drehzahlvariationsvorrichtung, die der zyklischen oder periodischen Variation der Drehzahl funktional vorgeschaltete, optionale Erfassung und Aufbereitung der betrachteten Messwerte sowie die der Drehzahlvariationsvorrichtung funktional nachgeschaltete Auslösung der Variation der Drehzahl des Mahltellers kann in Hard- und/oder Software realisiert sein. Soweit eine Realisierung in Software erfolgt, ist die Erfindung auch ein Computerprogramm mit Programmcodemitteln, um alle Schritte des hier und im Folgenden beschriebenen Verfahrens durchzuführen, wenn das Computerprogramm auf einem Steuergerät oder dergleichen für ein Antriebssystem für eine Vertikalmühle ausgeführt wird. Im Weiteren ist die Erfindung damit auch ein digitales Speichermedium mit elektronisch auslesbaren Steuersignalen, die so mit einem programmierbaren Steuergerät für ein Antriebssystem für eine Vertikalmühle zusammenwirken können, dass ein solches Verfahren ausgeführt wird. Schließlich ist die Erfindung auch ein Antriebssystem der oben genannten Art, das eine Verarbeitungseinheit und einen Speicher umfasst, wobei in den Speicher ein solches Computerprogramm geladen ist und im Betrieb des Antriebssystems durch dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Hinzuweisen ist noch darauf, dass der hier beschriebene Ansatz und einzelne und gegebenenfalls kombinierte Ausführungsformen auch mit dem in der parallelen, auf denselben Erfinder zurückgehenden Anmeldung derselben Anmelderin mit dem internen Aktenzeichen der Anmelderin 201312099 (amtliches Aktenzeichen noch nicht bekannt) vorgeschlagenen Ansatz und dort beschriebenen speziellen Ausführungsformen kombinierbar ist. Insoweit wird der vollständige Offenbarungsgehalt dieser parallelen Anmeldung, speziell im Hinblick auf die dort beschriebene Mustererkennung und die Maßnahmen aufgrund eines erkannten Musters, in die hier vorgelegte Beschreibung einbezogen.

Das Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch stark vereinfachte Darstellung einer Vertikalmühle mit einem mittels eines Schwerlastantriebs angetriebenen Mahlteller,
- FIG 2: eine Draufsicht auf den Mahlteller mit einem dortigen Mahlbett,
- FIG 3: eine Darstellung einer periodisch variierten Drehzahl des Mahltellers der Vertikalmühle sowie
- FIG 4: eine Darstellung eines Antriebssystems der Vertikalmühle mit einem davon umfassten Steuergerät, welches eine periodische Variation der Drehzahl des Mahltellers der Mühle, wie in FIG 3 gezeigt, bewirkt.

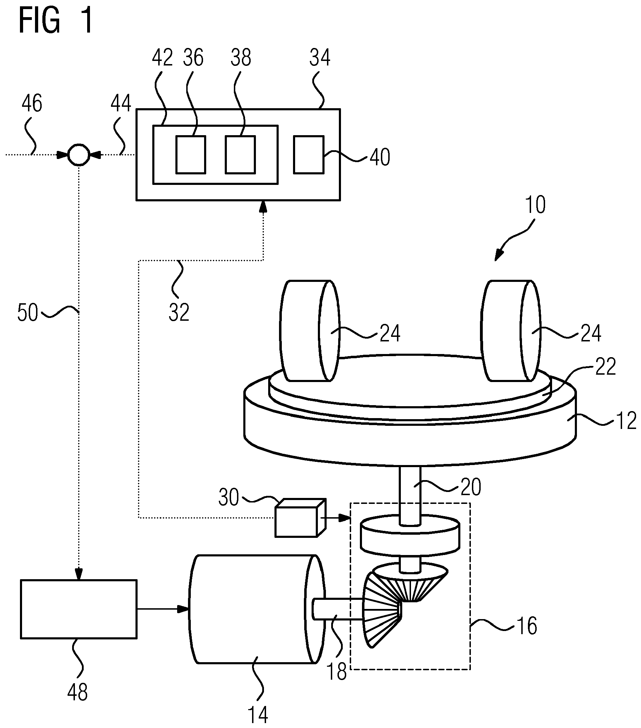

Die Darstellung in FIG 1 zeigt schematisch stark vereinfacht eine Vertikalmühle 10 zum Zerkleinern spröder Materialien, zum Beispiel Zementrohmaterial. Die Vertikalmühle 10 umfasst einen um die Vertikale drehbaren Mahlteller 12. Der Antrieb des Mahltellers 12 erfolgt mittels eines Schwerlastantriebs in Form eines Motors, insbesondere eines Elektromotors 14, und im hier gezeigten Beispiel mittels eines zwischen Elektromotor 14 und Mahlteller 12 befindlichen Getriebes 16. Das Getriebe 16 ist hier ohne Verzicht auf eine weitergehende Allgemeingültigkeit als Kegelradverzahnung mit einem anschließenden, ohne nähere Details dargestellten Planetengetriebe gezeigt. Das Getriebe 16 kann auch eine Stirnradverzahnung oder dergleichen und/oder ein vorgeschaltetes oder anschließendes Planetengetriebe oder dergleichen umfassen.

Die Vertikalmühle 10 umfasst zumindest eine angetriebene Welle. In der Darstellung in FIG 1 umfasst die Vertikalmühle 10 eine Motorwelle 18 und eine Mahltellerwelle 20. Sämtliche Mittel zur Übertragung der Antriebskraft des Elektromotors 14 auf den Mahlteller 12 werden als Antriebsstrang bezeichnet. Hier gehören zum Antriebsstrang zumindest der Elektromotor 14, die Motorwelle 18, das Getriebe 16 und die Mahltellerwelle 20.

Die Vertikalmühle 10 ist insgesamt ein schwingfähiges System. Im Betrieb der Vertikalmühle 10 versetzt der Elektromotor 14 den Mahlteller 12 in Rotation. Auf dem Mahlteller 12 befindet sich als Resultat des Mahlvorgangs sowie als Resultat von zugeführten, zu mahlenden Stoffen ein Mahlbett 22, also eine Mischung von gemahlenem und zu mahlendem Gut. Der Mahleffekt wird erreicht, indem eine Mahlwalze 24 oder mehrere Mahlwalzen 24 einerseits aufgrund ihres Gewichts, aber andererseits gegebenenfalls auch zusätzlich aufgebrachter Kräfte, die zum Beispiel mittels eines an einer schwenkbeweglich gelagerten Mahlwalze 24 angreifenden Hydraulikzylinders oder dergleichen aufgebracht werden, auf das Mahlbett 22 und den rotierenden Mahlteller 12 gepresst werden.

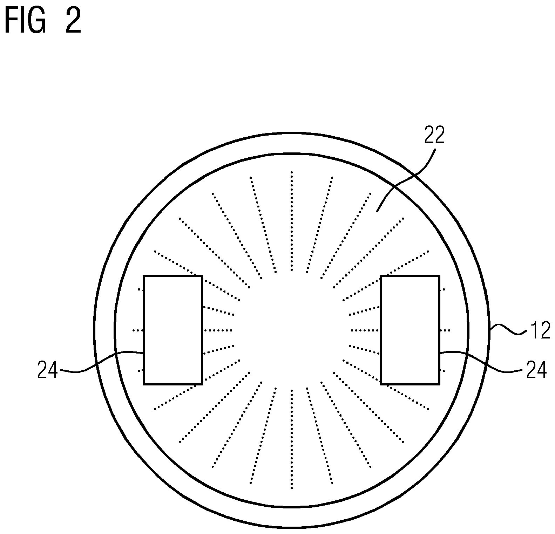

Die Darstellung in FIG 2 zeigt eine schematisch vereinfachte Prinzipdarstellung einer Draufsicht auf den Mahlteller 12 mit dem Mahlbett 22 und den hier zwei Mahlwalzen 24. Die gestrichelt gezeichneten radialen Linien innerhalb des Mahlbetts 22 sollen eine sich während des Mahlvorgangs häufig einstellende Welligkeit des Mahlbetts 22 andeuten. Eine solche Welligkeit des Mahlbetts 22 ist eine mögliche Ursache für das Mühlenrumpeln, das mit dem hier vorgestellten Ansatz vermieden werden soll. Bei einer Welligkeit des Mahlbetts 22 ist leicht vorstellbar, dass die schwenkbeweglich angeordneten Mahlwalzen 24 der Oberfläche des Mahlbetts 22 folgen und sich die damit ausgelöste Auf- und Abwärtsbewegung der Mahlwalzen 24 in Form von Schwingungen auf die Mühle 10 überträgt. Wenn auf diese Weise eine Eigenfrequenz der Mühle 10 angeregt wird, kann sogar eine Resonanz angefacht werden.

Bisher werden solche Schwingungen mittels einer am Mühlengerüst angebrachten Sensorik (Schwingungssensor; nicht gezeigt) erfasst. Sobald ein von einer solchen Sensorik aufgenommener Schwingungsmesswert einen Grenzwert überschreitet, wird der Elektromotor 14 gestoppt und die Mühle 10 wird später neu angefahren.

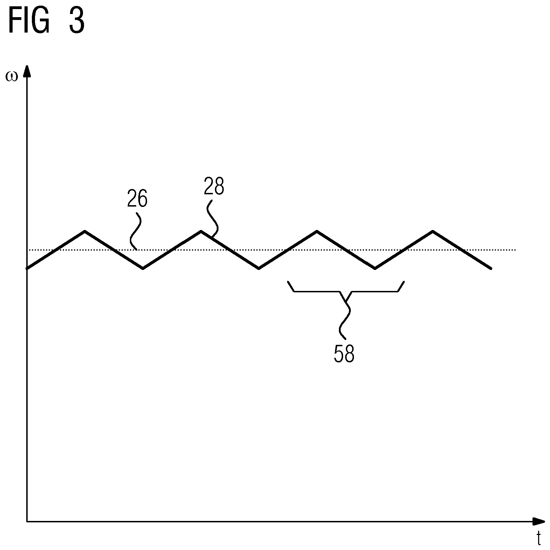

Hier wird vorgeschlagen, dass eine Drehzahl des Mahltellers 12 zyklisch, insbesondere periodisch, variiert wird. Die Darstellung in FIG 3 zeigt dazu zur Veranschaulichung eine abgesehen von betriebsbedingten Schwankungen normalerweise konstante Drehzahl 26 des Mahltellers 12 sowie eine gemäß dem hier vorgeschlagenen Ansatz periodisch variierte Drehzahl 28, nämlich eine hier symmetrisch um die ursprüngliche konstante Drehzahl 26 variierte Drehzahl 28 des Mahltellers 12. Die der periodischen Variation der Drehzahl 28 des Mahltellers 12 zugrunde liegende Frequenz liegt zum Beispiel im Bereich von 0,1 Hz. Die Amplitude der periodischen Variation liegt zum Beispiel im Bereich von 1 % der ohne die Variation geltenden Solldrehzahl. Im dargestellten Beispiel liegt der periodischen Variation der Drehzahl des Mahltellers 12 eine dreieckige Signalform zugrunde. Andere Signalformen, wie etwa ein Sinussignal, ein Rechtecksignal, ein rampenförmiges Signal usw. kommen ebenfalls in Betracht. Die gezeigte periodische Variation der Drehzahl 26 ist dabei eine Sonderform einer zyklischen Variation der Drehzahl. Das Kennzeichen einer solchen periodischen Variation der Drehzahl 26, aber auch jeder allgemeineren, zyklischen Variation der Drehzahl 26 des Mahltellers 12 ist, dass der zeitliche Mittelwert der variierten Drehzahl 26 jeweils die Solldrehzahl ergibt und dass die variierten Drehzahlwerte immer wieder den Drehzahlsollwert einnehmen oder durchlaufen.

Die Variation der Drehzahl des Mahltellers 12 vermeidet nach den Erkenntnissen des Erfinders, dass es überhaupt zu einem Mühlenrumpeln kommt, weil die zyklische oder periodische Variation der Drehzahl des Mahltellers 12 das Ausbilden einer regelmäßigen Welligkeit des Mahlbett 22, so wie dies in FIG 2 gezeigt ist, vermeidet. Durch die Variation der Mahltellerdrehzahl, speziell die periodische Variation der Mahltellerdrehzahl, ergibt sich ein örtlicher Versatz der Wellenkontur in der Oberfläche des Mahlbetts 22 gegenüber einem sich bei einer nicht variierten Drehzahl einstellenden Zustand. Die regelmäßige Anregung der Mahlwalzen 24 wird auf diese Weise gestört, also gewissermaßen aus dem Takt gebracht, und es entsteht keine Resonanz. Nach den Erkenntnissen des Erfinders ist eine nur leichte Variation (im Bereich von 1% bis 5%) ausreichend, um den gewünschten Effekt zu erzielen. Im Ergebnis rumpelt die Mühle 10 nicht so häufig, was sich günstig auf die Verfügbarkeit und die Freiheiten des Betreibers in der Prozessgestaltung auswirkt. Zudem werden die Mühlenmechanik und die Antriebsmechanik weniger stark beansprucht.

Indem auf diese Weise auf eine aufgrund des Antriebs des Mahltellers 12 resultierende Oberflächenstruktur des Mahlbetts 22 durch eine mittelbare oder unmittelbare zyklische oder periodische Variation der Drehzahl des Mahltellers 12 reagiert wird, handelt es sich um ein Verfahren zur Antriebsregelung der Mühle 10.

Die beschriebene zyklische oder periodische Variation der Drehzahl des Mahltellers 12 kann dauerhaft oder zeitgesteuert aktiv sein. Bei einer zeitgesteuerten Aktivierung der zyklischen oder periodischen Variation der Drehzahl des Mahltellers 12 kommt zum Beispiel in Betracht, dass die Drehzahlvariation jeweils zu äquidistanten Zeitpunkten für eine vorgegebene oder vorgebbare Zeitspanne aktiviert wird und danach wieder deaktiviert wird.

Die beschriebene zyklische oder periodische Variation der Drehzahl des Mahltellers 12 kann auch in Abhängigkeit von einem in Bezug auf die Mühle 10 erfassten Zustand aktiviert werden. Dafür kommt in Betracht, dass mittels einer insbesondere dem Antriebsstrang, also insbesondere Elektromotor 14, Motorwelle 18, Getriebe 16 oder Mahltellerwelle 20, oder dem Mahlteller 12 zugeordneten Sensorik 30 (FIG 1) schwingungsrelevante Messwerte 32, zum Beispiel Drehmoment- oder Drehzahlmesswerte 32, erfasst werden. Speziell schwingungsrelevante Messwerte 32 in Form von Drehmomentmesswerten 32 sind dabei ein Maß für das mittels des Getriebes 16 übertragene Moment oder Getriebemoment, also ein Maß für ein Moment, das zur Unterscheidung von einem auf den Elektromotor 14 wirkenden elektrischen Moment als das im Antriebsstrang, insbesondere im Getriebe 16, mechanisch wirksame Moment bezeichnet wird. Auf Basis eines solchen Messwerts 32 (oder der in der parallelen Anmeldung mit dem internen Aktenzeichen 201312099 beschriebenen Mustererkennung) kann die zyklische oder periodische Drehzahlvariation bedarfsweise aktiviert werden, zum Beispiel immer dann, wenn ein aufgenommener Messwert 32 einen vorgegebenen oder vorgebbaren Grenzwert überschreitet.

Zur zyklischen oder periodischen Variation der Drehzahl des Mahltellers 12 ist eine Drehzahlvariationsvorrichtung 34 (FIG 1) vorgesehen. Diese umfasst zum Beispiel einen in Soft- oder Hardware ausgeführten Signalgenerator 36 sowie - bei einer Implementierung des Verfahrens und seiner Ausführungsformen in Software - ein Computerprogramm 38 und eine zur Ausführung des Computerprogramms 38 vorgesehene Verarbeitungseinheit 40 in Form von oder nach Art eines Mikroprozessors. Das Computerprogramm 38 ist dabei in einen Speicher 42 der Drehzahlvariationsvorrichtung 34 geladen.

Der Signalgenerator 36 bewirkt durch Erzeugung eines entsprechenden zyklischen oder periodischen Signals die zyklische bzw. periodische Variation der Drehzahl des Mahltellers 12, indem zum Beispiel ein resultierendes, zyklisches bzw. periodisches Ausgangssignal 44 der Drehzahlvariationsvorrichtung 34 mit einem Drehzahlsollwert 46 kombiniert wird und die Kombination der beiden Signale 44, 46 (Addition oder Subtraktion) einem dem Elektromotor 14 in an sich bekannter Art und Weise vorgeschalteten Frequenzumrichter 48 zugeführt wird, der aufgrund des so erhaltenen Eingangssignals 50 eine jeweilige Versorgungsspannung, insbesondere Wechselspannung, zum Antrieb des Elektromotors 14 erzeugt. Damit schwankt die Drehzahl des Elektromotors 14 mit der von der Drehzahlvariationsvorrichtung 34 vorgegebenen Zyklizität oder Periodizität und entsprechend schwankt auch die resultierende Drehzahl des Mahltellers 12.

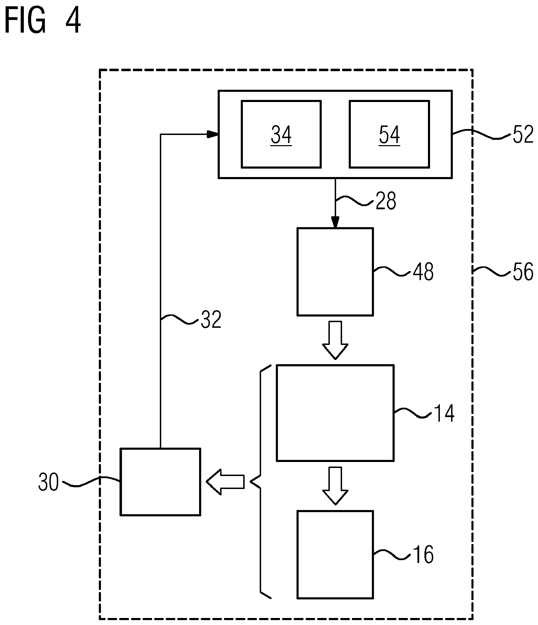

Die Darstellung in FIG 4 zeigt abschließend in schematisch vereinfachter Form, dass die Drehzahlvariationsvorrichtung 34 zum Beispiel eine Teilfunktionalität eines Steuergeräts 52 oder dergleichen, also einer Steuerungseinrichtung zur Ansteuerung des Frequenzumrichters 48, ist. Das Steuergerät 52 kann neben der Drehzahlvariationsvorrichtung 34 oder einer Softwareimplementation der Drehzahlvariationsvorrichtung 34 auch weitere Funktionseinheiten, wie zum Beispiel eine Regelungsvorrichtung 54 zur Regelung der Drehzahl des Elektromotors 14 oder Ähnliches umfassen. Das Steuergerät 52, der Frequenzumrichter 48 und der Elektromotor 14 bilden zusammen ein Antriebssystem 56 zum Antrieb der Mühle 10. Anstelle des Frequenzumrichters 48 oder zusätzlich zu einem Frequenzumrichter 48 kommt auch die Verwendung eines Überlagerungsgetriebes in Betracht.

Mittels der Drehzahlvariationsvorrichtung 34 ist bei besonderen Ausführungsformen des hier beschriebenen Ansatzes zum Beispiel die der periodischen Drehzahlvariation zugrunde liegende Signalform und/oder eine Periodendauer 58 (FIG 4) des der periodischen Drehzahlvariation zugrunde liegenden Ausgangssignals 44 der Drehzahlvariationsvorrichtung 34 auswählbar.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Antriebsregelung einer Vertikalmühle 10 mit einem um die Vertikale rotierbaren Mahlteller 12, wobei der Mahlteller 12 durch einen einen Elektromotor 14 und ein Getriebe 16 umfassenden Antriebsstrang antreibbar ist, wobei eine Drehzahl des Mahltellers 12 zyklisch, insbesondere periodisch, variiert wird, um ein Rumpeln der Mühle 10 zu vermeiden, sowie ein nach dem Verfahren arbeitendes Antriebssystem 56, mit dem eine Drehzahl des Mahltellers 12 periodisch variierbar ist.

## Patentansprüche

1. Verfahren zur Antriebsregelung einer Vertikalmühle (10) mit einem um die Vertikale rotierbaren Mahlteller (12), wobei der Mahlteller (12) durch einen einen Elektromotor (14) und ein Getriebe (16) umfassenden Antriebsstrang antreibbar ist, wobei eine Drehzahl des Mahltellers (12) zyklisch variiert wird.

2. Verfahren nach Anspruch 1, wobei die zyklische Variation der Drehzahl des Mahltellers (12) zeitgesteuert zu insbesondere vorgegebenen oder vorgebbaren, insbesondere äquidistanten Zeitpunkten für eine vorgegebene oder vorgebbare Zeitspanne aktiviert wird.

3. Verfahren nach Anspruch 1, wobei die zyklische Variation der Drehzahl des Mahltellers (12) als Reaktion auf eine einen vorgegebenen oder vorgebbaren Grenzwert überschreitende Schwankung schwingungsrelevanter Messwerte (32), insbesondere schwingungsrelevanter Messwerte (32) in Form von Messwerten zu einer Drehzahl eines rotierenden Bauteils der Vertikalmühle (10) und/oder schwingungsrelevanter Messwerte (32) in Form von Messwerten zu einem im oder auf das Getriebe (16) wirkenden Antriebs- und/oder Stützmoments, aktiviert wird.

4. Verfahren nach Anspruch 1, 2 oder 3, wobei die zyklische Variation der Drehzahl in Form einer periodischen Variation der Drehzahl erfolgt und wobei eine Amplitude und/oder Periodendauer der periodischen Variation der Drehzahl des Mahltellers (12) in Abhängigkeit von einer einen vorgegebenen oder vorgebbaren Schwellwert überschreitenden Schwankung schwingungsrelevanter Messwerte (32), insbesondere schwingungsrelevanter Messwerte (32) in Form von Messwerten zu einer Drehzahl eines rotierenden Bauteils der Vertikalmühle (10) und/oder schwingungsrelevanter Messwerte (32) in Form von Messwerten zu einem im oder auf das Getriebe (16) wirkenden Antriebs- und/oder Stützmoments, erhöht oder verringert wird.

5. Verfahren nach einem der vorangehenden Ansprüche, wobei die zyklische Variation der Drehzahl in Form einer periodischen Variation der Drehzahl erfolgt und wobei die periodische Variation der Drehzahl des Mahltellers (12) mit einem sinusförmigen Profil, einem Dreieckprofil, einem Rechteckprofil oder einem Rampenprofil erfolgt.

6. Verfahren nach Anspruch 5, wobei eine Änderung einer Signalform, mit welcher die periodische Variation der Drehzahl des Mahltellers (12) erfolgt, in Abhängigkeit von einer einen vorgegebenen oder vorgebbaren Schwellwert überschreitenden Schwankung schwingungsrelevanter Messwerte (32), insbesondere schwingungsrelevanter Messwerte (32) in Form von Messwerten zu einer Drehzahl eines rotierenden Bauteils der Vertikalmühle (10) und/oder schwingungsrelevanter Messwerte (32) in Form von Messwerten zu einem im oder auf das Getriebe (16) wirkenden Antriebs- und/oder Stützmoments, ausgelöst wird.

7. Verfahren nach einem der vorangehenden Ansprüche, wobei der Elektromotor (14) von einem Frequenzumrichter (48) gespeist wird und wobei die zyklische Variation der Drehzahl des Mahltellers (12) mittels einer entsprechenden Ansteuerung des Frequenzumrichters (48) erfolgt.

8. Verfahren nach einem der vorangehenden Ansprüche, wobei zum Erhalt schwingungsrelevanter Messwerte (32) in Form von Drehmoment- oder Drehzahlmesswerten (32) eine Sensorik (30) eine Drehzahl eines rotierenden Bauteils des Antriebsstrangs und/oder mindestens ein im oder auf das Getriebe (16) wirkendes Antriebs- und/oder Stützmoment erfasst.

9. Computerprogramm (38) mit Programmcodemitteln, um alle Schritte von jedem beliebigen der Ansprüche 1 bis 8 durchzuführen, wenn das Computerprogramm (38) auf einem Steuergerät (52) eines Antriebssystems (56) für eine Vertikalmühle (10) ausgeführt wird.

10. Digitales Speichermedium mit elektronisch auslesbaren Steuersignalen, die so mit einem programmierbaren Steuergerät (52) für ein Antriebssystem (56) für eine Vertikalmühle (10) zusammenwirken können, dass ein Verfahren nach einem der Ansprüche 1 bis 8 ausgeführt wird.

11. Antriebssystem (56) für eine Vertikalmühle (10) mit einem um die Vertikale rotierbaren Mahlteller (12), wobei das Antriebssystem
- einen Elektromotor (14),
- einen den Elektromotor (14) speisenden Frequenzumrichter (48) und
- ein Getriebe (16) zwischen dem Elektromotor (14) und dem Mahlteller (12)
aufweist, und wobei das Antriebssystem nach einem Verfahren gemäß einem der Ansprüche 1 bis 8 die Drehzahl des Mahltellers (12) zyklisch variiert.

12. Antriebssystem (56) nach Anspruch 11, mit einer Sensorik (30) zur Aufnahme schwingungsrelevanter Messwerte (32), insbesondere schwingungsrelevanter Messwerte (32) in Form eines Drehzahlmesswerts (32) zu einer Drehzahl eines rotierenden Bauteils der Vertikalmühle (10) oder in Form eines Drehmomentmesswerts (32) zu mindestens einem im oder auf das Getriebe (16) wirkenden Antriebs- und/oder Stützmoment.

13. Steuergerät (52) eines Antriebssystems (56) einer Vertikalmühle (10) nach Anspruch 11 oder 12, mit einer Verarbeitungseinheit (40) und einem Speicher (42), in den ein Computerprogramm (38) nach Anspruch 8 geladen ist, das im Betrieb des Steuergeräts (52) durch die Verarbeitungseinheit (40) ausgeführt wird.

## Claims

1. Drive control method for a vertical roller mill (10) having a grinding table (12) rotatable about the vertical, wherein the grinding table (12) can be driven by a drive train comprising an electric motor (14) and a gearbox (16), wherein a rotation speed of the grinding table (12) can be cyclically varied.

2. Method according to claim 1, wherein the cyclical varying of the rotation speed of the grinding table (12) is activated in a time-controlled manner at in particular predefined or predefinable, in particular equidistant points in time over a predefined or predefinable period of time.

3. Method according to claim 1, wherein the cyclical varying of the rotation speed of the grinding table (12) is activated as a reaction to a fluctuation of vibration-relevant measured values (32), in particular of vibration-relevant measured values (32) in the form of measurements of the rotation speed of a rotating component of the vertical roller mill (10) and/or of vibration-relevant measured values (32) in the form of measurements of a driving and/or supporting torque acting in or on the gearbox (16) if said measured values exceed a predefined limit.

4. Method according to claim 1, 2 or 3, wherein the rotation speed is cyclically varied in the form of a periodic variation of the speed and wherein an amplitude and/or period of the periodic variation of the rotation speed of the grinding table (12) is increased or reduced as a function of a fluctuation of vibration-relevant measured values (32), in particular of vibration-relevant measured values (32) in the form of measurements of the rotation speed of a rotating component of the vertical roller mill (10) and/or of vibration-relevant measured values (32) in the form of measurements of a driving and/or supporting torque acting in or on the gearbox (16) if said fluctuation exceeds a predefined limit.

5. Method according to one of the preceding claims, wherein the speed is cyclically varied in the form of a periodic variation of the speed and wherein the periodic variation of the rotation speed of the grinding table (12) takes place with a sinusoidal profile, a rectangular profile, a square-wave profile or a ramp-profile.

6. Method according to claim 5, wherein a change in a signal waveform with which the rotation speed of the grinding table (12) is periodically varied is initiated as a function of a fluctuation of vibration-relevant measured values (32), in particular of vibration-relevant measured values (32) in the form of measurements of the rotation speed of a rotating component of the vertical roller mill (10) and/or of vibration-relevant measured values (32) in the form of measurements of a driving and/or supporting torque acting in or on the gearbox (16) if said fluctuation exceeds a predefined limit.

7. Method according to one of the preceding claims, wherein the electric motor (14) is fed by a frequency converter (48) and wherein the rotation speed of the grinding table (12) is cyclically varied by means of appropriate control of the frequency converter (48).

8. Method according to one of the preceding claims, wherein to obtain vibration-relevant measured values (32) in the form of torque or speed measurements (32), a sensor system (30) measures a rotation speed of a rotating component of the drive train and/or at least one driving and/or supporting torque acting in or on the gearbox (16).

9. Computer program (38) having program code means of carrying out all the steps of any of the claims 1 to 8 when the computer program (38) is executed on a controller (52) of a drive system (56) for a vertical roller mill (10).

10. Digital storage medium having electronically readable control signals which can interoperate with a programmable controller (52) for a drive system (56) for a vertical roller mill (10) such that a method according to one of claims 1 to 8 is carried out.

11. Drive system (56) for a vertical roller mill (10) having a grinding table (12) rotatable about the vertical, wherein the drive system has
- an electric motor (14),
- a frequency converter (48) feeding the electric motor (14),
- a gearbox (16) between the electric motor (14) and the grinding table (12),
and wherein the drive system cyclically varies the rotation speed of the grinding table (12) according to the method according to one of claims 1 to 8.

12. Drive system (56) according to claim 11, comprising a sensor system (30) for acquiring vibration-relevant measured values (32), in particular vibration-relevant measured values (32) in the form of a speed measurement (32) for a rotation speed of a rotating component of the vertical roller mill (10) or in the form of a torque measurement (32) for at least one driving or supporting torque acting in or on the gearbox (16).

13. Controller (52) of a drive system (56) of a vertical roller mill (10) according to claim 11 or 12, having a processing unit (40) and a memory (42) into which a computer program (38) according to claim 8 is loaded which is executed by the processing unit (40) during operation of the controller (52) .

## Revendications

1. Procédé de régulation de l'entraînement d'un broyeur (10) vertical, ayant un plateau (12) de broyage tournant autour de la verticale, le plateau (12) de broyage pouvant être entraîné par une chaîne cinématique comprenant un moteur (14) électrique et une transmission (16), dans lequel on fait varier cycliquement une vitesse de rotation du plateau (12) de broyage.

2. Procédé suivant la revendication 1, dans lequel on active la variation cyclique de la vitesse de rotation du plateau (12) de broyage, d'une manière commandée dans le temps, à des instants, notamment prescrits ou pouvant l'être, notamment équidistants, pendant un laps de temps prescrit ou pouvant l'être.

3. Procédé suivant la revendication 1, dans lequel on active la variation cyclique de la vitesse de rotation du plateau (12) de broyage en réaction à une fluctuation, dépassant une valeur limite prescrite ou pouvant l'être, de valeurs (32) de mesure pertinentes pour des vibrations, notamment des valeurs (32) de mesure pertinentes pour une vibration, sous la forme de valeurs de mesure d'une vitesse de rotation d'une pièce tournante du broyeur (10) vertical et/ou de valeurs (32) de mesure pertinentes pour une oscillation, sous la forme de valeurs de mesure d'un couple d'entraînement et/ou d'appui agissant dans ou sur la transmission (16).

4. Procédé suivant les revendications 1, 2 ou 3, dans lequel la variation cyclique de la vitesse de rotation s'effectue sous la forme d'une variation périodique de la vitesse de rotation et dans lequel on augmente ou on diminue une amplitude et/ou une période de la variation périodique de la vitesse de rotation du plateau (12) de broyage, en fonction d'une fluctuation dépassant les valeurs de seuil, données à l'avance ou pouvant l'être, de valeurs (32) de mesure pertinentes pour une vibration, notamment de valeurs (32) de mesure pertinentes pour une vibration, sous la forme de valeurs de mesure d'une vitesse de rotation d'une pièce tournante du broyeur (10) vertical et/ou de valeurs (32) de mesure pertinentes pour une oscillation, sous la forme de valeurs de mesure d'un couple d'entraînement et/ou d'appui agissant sur la transmission (16).

5. Procédé suivant l'une des revendications précédentes, dans lequel la variation cyclique de la vitesse de rotation s'effectue sous la forme d'une variation périodique de la vitesse de rotation et dans lequel la variation périodique de la vitesse de rotation du plateau (12) du broyeur s'effectue avec un profil sinusoïdal, un profil triangulaire, un profil rectangulaire ou un profil en rampe.

6. Procédé suivant la revendication 5, dans lequel une variation d'une forme de signal, par laquelle la variation périodique de la vitesse de rotation du plateau (12) du broyeur s'effectue, est déclenchée en fonction d'une fluctuation, dépassant une valeur de seuil donnée à l'avance ou pouvant l'être, de valeurs (32) de mesure, notamment de valeurs (32) de mesure pertinentes pour une vibration, sous la forme de valeurs de mesure d'une vitesse de rotation d'une pièce tournante du broyeur (10) vertical et/ou de valeurs (32) de mesure pertinentes pour une vibration, sous la forme de valeurs de mesure d'un couple d'entraînement et/ou d'appui agissant dans ou sur la transmission (16).

7. Procédé suivant l'une des revendications précédentes, dans lequel on alimente le moteur (14) électrique par un convertisseur (48) de fréquence et dans lequel la variation cyclique de la vitesse de rotation du plateau (12) de broyeur s'effectue au moyen d'une commande correspondante du convertisseur (48) de fréquence.

8. Procédé suivant l'une des revendications précédentes, dans lequel, pour obtenir des valeurs (32) de mesure pertinentes pour une vibration, sous la forme de valeurs (32) de mesure de couple de rotation ou de vitesse de rotation, un agencement de capteurs (30) détecte une vitesse de rotation d'une pièce tournante de la chaîne cinématique et/ou au moins un couple d'entraînement et/ou d'appui, agissant dans ou sur la transmission (16).

9. Programme (38) d'ordinateur ayant des moyens de code de programme pour effectuer tous les stades de n'importe laquelle des revendications 1 à 8, lorsque le programme (38) d'ordinateur est réalisé sur l'appareil (52) de commande d'un système (56) d'entraînement d'un broyeur (10) vertical.

10. Support de mémoire numérique ayant des signaux de commande pouvant être déchiffrés électroniquement, qui peuvent coopérer avec un appareil (52) de commande programmable d'un système (56) d'entraînement d'un broyeur (10) vertical, de manière à réaliser un procédé suivant l'une des revendications 1 à 8.

11. Système (56) d'entraînement d'un broyeur (10) vertical ayant un plateau (12) de broyeur tournant autour de la verticale, dans lequel le système d'entraînement a
- un moteur (14) électrique,
- un convertisseur (48) de fréquence alimentant le moteur (14) électrique et
- une transmission (16) entre le moteur (14) électrique et le plateau (12) du broyeur
et dans lequel le système d'entraînement fait varier cycliquement la vitesse de rotation du plateau (12) du broyeur par un procédé suivant l'une des revendications1 à 8.

12. Système (56) d'entraînement suivant la revendication 11, comprenant un agencement (30) de capteur d'enregistrement de valeurs (32) de mesure pertinentes pour une vibration, notamment de valeurs (32) de mesure pertinentes pour une vibration sous la forme d'une valeur (32) de mesure d'une vitesse de rotation d'une pièce tournante du broyeur (10) vertical, ou sous la forme d'une valeur (32) de mesure d'au moins un couple d'entraînement et/ou d'appui, agissant dans, ou sur, la transmission (16).

13. Appareil (52) de commande d'un système (56) d'entraînement d'un broyeur (10) vertical suivant la revendication 11 ou 12, comprenant une unité (40) d'entraînement et une mémoire (42), dans laquelle est chargé un programme (38) d'ordinateur suivant la revendication 8, qui, lorsque l'appareil (52) de commande fonctionne, est exécuté par l'unité (40) de traitement.
